# EUROPEAN PATENT SPECIFICATION

(11) **EP 1 855 549 B1**
(45) Date of publication and mention of the grant of the patent: **23.11.2011**
(21) Application number: 06715717.2
(22) Date of filing: 12.01.2006
(51) Int. Cl.: A23L 1/30, A23L 1/221, A23L 1/314, A23C 9/13, A23C 9/152

(54) **FOOD FOR PREVENTING FATNESS AND HYPERLIPEMIA**
NAHRUNGSMITTEL ZUR VORBEUGUNG GEGEN FETTLEIBIGKEIT UND HYPERLIPÄMIE
ALIMENT DESTINE A LA PREVENTION DE L'ADIPOSITE ET DE L'HYPERLIPEMIE

(30) Priority: 24.02.2005 KR 20050015218
(43) Date of publication of application: 21.11.2007
(73) Proprietor: Bionutrigen Co., Ltd, Yusong-ku, Taejon 305-333 (KR)
(72) Inventor: BOK, Song-hae, Deajeon 302-744 (KR); LEE, Sang-ku, Yuseong-gu, Deajeon 305-770 (KR); JEONG, Tae-sook, Seo-gu, Daejeon 302-120 (KR); KIM, Eun-eai, Daejeon 301-842 (KR); CHOI, Myung-sook, Suseong-gu, Daegu 706-746 (KR)
(74) Representative: McKelvey, Ian Edward
(86) International application number: PCT/KR2006/000139
(87) International publication number: WO 2006/090980

(56) References cited:
- WO-A1-00/15047
- WO-A1-00/15215
- WO-A1-00/15237
- WO-A1-99/52380
- WO-A1-2004/016092
- WO-A2-01/91586
- JP-A- 07 102 286
- JP-A- 59 102 380
- JP-A- 2004 262 927
- KR-A- 20020 012 384
- US-A- 6 133 311

## Description

### TECHNICAL FIELD

The present invention relates to food for preventing fatness and hyperlipidemia, more specifically meat products such as beef, pork, duck meat or mutton, processed meat products such as hamburger, sausage, hot dog, ham, bacon or canned meat, and dairy product such as milk, yogurt, cheese or ice-cream for preventing fatness, heart disease including hyperlipidemia, heart failure or paralysis, and adult diseases such as fatty liver easy to happen by excessive meats intake.

### BACKGROUND ART

The fatness population currently amounted to 30 to 40% around the world, and America and U.N. proclaimed a war on fatness, and adult disease such as cardiovascular disease, cancer, diabetes, arthritis or fatty liver have been increased in an advanced country in connection with fatness, and it is analyzed that such diseases are generally caused by excessive meat and fat intake. To solve those problems, it .is judicious to have a self-restraint on excessive meats and fat intake.

Furthermore, if we take anti-fatness, anti-hyperlipidemia contents being included in meat products, processed meat products or dairy products capable of causing fatness and hyperlipidemia, it is possible to increase the pleasure at the table without injurious to the health.

The present inventors have studied on plant extracts and powders for preventing fatness and hyperlipidemia for a long time. The present inventors also have been confirmed that bioflavonoid extracted from citrus peels can prevent hyperlipidemia and arteriosclerosis and inhibit oxidation of fat in blood as feeding to animal or human being (①song-Hae Bok, Byung-Hwa Hyun, Tae-Suk Jeong, Chul-Ho Lee, Yang-Gyu Choi, Yong-Guk Guen, Eun-Suk Lee, Sae-Bom Lee, Yong-Bae Park, Hyo-Su Kim, Seong-Joon Choi, Myung-Suk Choi, Yong-Bok Park, 1998, Developement of a new anti-hyperlipidemia and anti-arteriosclerosis preparations using bioflavonoid from citrus. J. Kor. Soc. Arteriosclerosis & Vascular Biol. 1:5-33; ②Seong-Jun Choi, Hyo-Su Lim, Tae-Suk Jeong, Song-Hae Bok, Young-Bae Park. 1998, Lipid lowering activity of high Cholestrolemia rabbit and anti-arteriosclerosis effect of Naringin, Korean Circulation J 1998:28(11) :1873-1881; ③Tae-Sook Jeong, Myung-Sook Choi, Young-Bae Park, and Song-Hae Bok. 2000, Cholesterol-Lowering or Antiatherogenic Effects of Citrus Bioflavonoids and Their Mechanisms. Food Industry and independent Nutrition. Vol.5, No.2 : 21-26; ④Park, Y. B., Jeong, T. S., Lee, S. H., Bok, S. H., Kwon, Y. K., Bae, K. H., Lee, M. K. and Choi, M. S. 2000, Hesperidin Lowers Activities of 3-Hydroxy-3-methylglutaryl-CoA Reductase and Acyl-CoA: Cholesterol Acyltransferase in Rats Fed High-Cholesterol Diet. J. Food Sci. Nutr. 5(2) : 109-113; ⑤Kyung-Min Do, Yong Bok Park, Song-Hae Bok, Mi-Kyung Lee, Tae-Sook Jeong and Myung-Sook Choi, 2001, Alteration of Lipid Metabolism by Ginseng Supplements with Different Levels of Vitamin E in High Cholesterol-Fed Rats. J. of Food Sci. and Nutr. 6(1):66-72; ⑥Myung-Sook Choi and Song-Hae Bok. 2001, Comparison of Jujube Extract with Tangerine Peel Extract in Lowering Plasma Lipids and Activities of Cholesterol Regulating Enzymes in Cholesterol-Fed Rats. J. of Food Sci. and Nutr. 6(2):122-129).

In addition, extracts of citrus peels and bioflavonoid from citrus have been well known by their effects on anti-cancer, anti-bacteria, anti-oxidation and lowering blood pressure{Saija, A., et., Free Radical Biol. Med., 19, 481-486(1995); Matsubara, Y., et al., above literature; Galati E. M., et al., above literature ; Felicia V., et al., Nutr. Cancer, 26, 167-181(1996); EP 0352147 A2(1990.1.24); and Kaul, T.N., et al., J. Med Virol., 15, 71-79 (1985) } .

In addition, it has been established that limonoidic substances in peels and seeds of citrus have anticancer activity {(Lam, L. K. T., et al., Inhibition of chemically induced carcinogen esis by citrus limonoids. In Food Phytochemicals for Cancer Prevention, Vol. I, ACS Symposium series No. 546, Huang, M. T., O. Osawa. C. T. Ho, R. Rosen(ed), 1993}.

It has been also confirmed that ingredients from roots of ginseng may have effects on inhibiting the activity of cholesterol ester protein and the activity of ACAT enzyme and improving the lipid metabolism (①Kwon B. M., J. Y. Nam, S. H. Lee, T. S. Jeong, Y. K. Kim, S. H. Bok. 1996, Isolation of cholesteryl ester transfer protein inhibitors from Panax ginseng Roots. Chem. Pharm. Bull. 44:444-445; ②Kwon B. M., S. H. Ro, M. K. Kim, J. Y. Nam, H. J. Jung, I. R. Lee, Y. K. Kim, S. H. Bok. 1997, Polyacetylene analogs, isolated from hairy roots of Panax ginseng inhibit acyl CoA-cholesterol acyltransferase. Planta Medica 63:552-553).

The present inventors could suppose that seasoning compositions containing extracts from onion, garlic, ginger or jujube may have effects on reducing cholesterol contents in blood and increasing HDL cholesterol contents to prevent cardiovascular diseases such as arteriosclerosis, hyperlipidemia, hyperpiesia or paralysis etc.(Korean Patent No.0428936).

Onion, garlic and ginger have been widely known to improve lipid metabolism. For example, it has been known that garlic has prominent effects on preventing cardiovascular diseases, and promoting the circulation of blood, immuno-potentiating and anticancer activity(L. D. Lawson, Bioactive organosulfur compounds of garlic and garlic products: role in reducing blood lipids, in Human Medicinal Agents, 306-330, D. Kinghorn and M. F. Balaandrin Eds., ACS symposium Series 534, 1993), and onion also has beneficial effects on preventing cardiovascular diseases such as reducing cholesterol contents in the blood, increasing high density lipoprotein(HLD) in the blood, inhibiting coagulation of thrombocyte{J. Carper, Food Pharmacy, Batam Books(1989)}. Also, ginger contains dehydrogingeridone as cholesterol ester transfer protein (CETP) useful for the circulation of the blood (Korean Patent Application No.97-34195). A jujube has been found to contain CETP inhibitor as active ingredient for reducing the blood pressure and cholesterol content (Korean Patent Application Nos. 97-59425 and 97-59426). Also, extracts of citrus peels and hesperidin or naringin isolated from them have been found to efficiently prevent arteriosclerosis (Korean Patent Application Nos. 97-55578, 97-55579 and 97-55580).

It has been found that hesperodin, naringin etc. as main bioflavonoids from citrus reduce an activity of 3-hydroxy-3 methyl-glutaryl coA reductase as cholesterol synthase and acylcoA: cholesterol transferase to prevent hyperlipidemia in animal. Other flavonoids will have similar activity {①Bok, S. H., Lee, S. H., Park, Y. B., K. H., Son, K. H., Jeong, T. S. and Choi, M. S. 1999, Plasma and Hepatic Cholesterol and Hepatic Activities of 3-hydroxy-3-methyl-glutaryl-CoA Reductase and Acyl CoA: Cholesterol Transferase are Lower in Rats fed Citrus Peel Extract or a Mixture of Citrus Bioflavonoids, J. of Nutrition. Vol. 129(6): 1182-1185; ② Shin, Y. W., Bok, S. H., Jeong, T. S., Bae, K. H., Jeoung, N. H., Choi, M. S., and Park, Y. B. 1999, Hypocholesterolemic Effect of Naringin Associated with Hepatic Cholesterol Regulating Enzyme Changes in Rats. International Journal of Vitamin and Nutrition, Vol 69(5):341-347; ③ Bok, S. H., Shin, Y. W., Bae, K. H., Jeoug, T. S., Kwon, Y. K., Park, Y. B. and Choi, M. S. 2000, Effects of naringin and lovastatin on plasma and hepatic lipids in high-fat and high-cholesterol fed rats. Nutrition Research. Vol.20, No 7 : 1007-1015}.

In addition, the present inventors have been confirmed that naringin inhibit deposition of cholesterol on basilar artery of rabbit and have anti-oxidation effect {①Hyo Soo Kim, Tae Sook Jeong, Song Hae Bok, Song Jun Choi, 2001, Naringin has an Anti-atherogenic Effect with the inhibition of Intercellular Adhesion Molecule-1 in hypercholesterolemic rabbits. , J. of Cardiovascular Pharmacology 38(6): 947-955; ②Seon-Min Jeon, Song-Hae Bok, Moon-Kyoo Jang, Mi-Kyung Lee, Kyung-Tak Nam, Yong-Bok Park, Soon-Jae Rhee, Myung-Sook Choi. 2001, Antioxidative Activity of Naringin and Lovastatin in High Cholesterol-Fed Rabbits. Life Science (SCI) . 69: 2855-2866}.

In addition, it has been confirmed that rutin, kesertin and cinnamic acid deriverates have an effect on preventing hyperlipidemia{①Bok, S. H., S. Y. Park, Y. B. Park, M. K. Lee, S. M. Jeon, T. S. Jeong, and M. S. Choi, 2002 Quercetin dihydrate and gallate supplements lower plasma and hepatic lipids and change activities of hepatic antioxidant enzymes in high cholesterol-fed rats. Submitted Int. J. Vitam. Nur. Res(SCI), 72 (3) : 161-169*;* ②Myung-Sook Choi, Sun-Young Park, Seon-Min Jeon, Yong Bok Park, Soon-Jae Lee, Tae-Sook Jeong, Song-Hae Bok, 2002 "Effect of Rutin and Tannic Acid Supplements on Cholesterol Metabolism in Rats", J. Nutrition Research(SCI), 22:283-295; ③Jeong-Sun Lee, Song-Hae Bok, Tae-Sook Jeong, Surk-Sik Moon, Yong Bok Park, Myung-Sook Choi, 2003 "4-Hydroxycinnamate lowers plasma and hepatic lipids without changing antioxidant enzyme activities" Annals of Nutrition Metabolism 2003;47:144-151; ④Sangku Lee, Chul-Ho Lee, Jung-Hoon Oh, Eun Eai Kim, Yang-Kyu Choi, Eun-Hee Kim, Woo Song Lee, Song-Hae Bok and Tae-Sook Jeong, 2003 "Anti-Atherogenic Effects of 3,4-Dihydroxy Hydrocinnamides" Bioorganic & Medicinal Chemistry Letters 13(2003)2681-2682}.

The present inventors have also found that extracts of citrus peel, extracts of ginger, extracts of jujube, ginseng, hesperidin, naringin, disomin, neohesperidin, dihydrocalcon etc. are effective to prevent hyperlipidemia and hyper-piesia etc.(Korean Patent Nos.213895, 240199, 254528, 254527, 296250, 291141, 291142, 304430, 258582 and 258583).

Also, the present inventors have been confirmed that bioflavonoid, naringin, hesperedin from tangerine peel may have effects on preventing heart diseases in animal including human being (U.S patent 5,763,414: 1998.6.9, U.S patent 5,877,208: 1999.3.2, U.S patent 5,792,461: 1998.8.11), and bioflavonoid increases high density lipoprotein(HDL)(U.S patent 6,133,241: 2000.10.17) inhibits the coagulation of thrombocytes(U.S patent 6,221,357: 2001.4.24) has an effect on reducing a blood-sugar lever (U.S patent 696,364: 2000.8.1), and cinnamic acid abundant in coffee beans is effective to prevent hyperlipidemia(U.S patent 6,313,171), and phenolic constituents such as tannin, elagric acid, gallic acid(gallate) and catechin line in green tea have beneficial effects on preventing hyperlipidemia(U.S patent 6,133,311).

Recently, the present inventors have been confirmed that persimmon leaves, buckwheat leaves, Chinese matrimony vine leaves and ginseng powder etc. have antifatness effect on animal including human being, and identified that boiling water extracts and ethanol extracts of those materials have the same effect(Korean Patent Application Nos. 2001-79485, 2002-37063, 2002-48037, 2002-64919, 2002-64920, 2003-26979, and 2003-26981).

As mentioned above, the present inventors have studied for a long time in constituents of food such as vegetables and fruits etc. having effects on prevention of adult diseases, especially antifatness effect, prevention of cardiovascular disease (hyperlipidemia, hyper-piesia, arteriosclerosis), prevention of diabetes, improvement of blood circulation, inhibition of fatty liver, antiaging effect(ginseng etc.) etc., and the present inventors have studied to effective components useful to the health without the side effect or toxicity although taking for a while, and have approved their effects by administering experiment on animal or human body.

It can be possible to modify ordinary meat products, processed meat products or dairy products into high-tech product of "Well-being" bland convenient to eat and with no harmful by administrating plant powders or extracts having effects on preventing antifatness and hyperlipidemia directly direct into meat products, processed meat products and dairy products which capable of causing heart disease and fatness commonly to all person in excessive intake or by mixing them,

With consideration above, the present inventors have accomplished the present invention by firstly preparing powders, boiling water extracts and ethanol extracts of plant containing plenty of bioflavonoid substances, polyphenolic substances or diet fiber, and then treating meat products, processed meat products or dairy products with those preparation separately or mixture thereof.

Accordingly, it is an object of the present invention to provide food useful for prevention of fatness and hyperlipidemia.

It is another object of the present invention to provide method for preparing food useful for prevention of fatness and hyperlipidemia.

### DISCLOSURE OF THE INVENTION

### TECHNICAL PROBLEMS

The above object of the present invention have been achieved by preparing powders, boiling water extracts or ethanol extracts of plant containing plenty of bioflavonoid substances, polyphenolic substances or diet fibers, and then treating meats products, processed meats products or dairy products with those preparation independently or mixture of them.

### TECHNICAL SOLUTION

Now, the construction of the present invention is explained in detailed. The invention is best described at claims 1 and 6.

The present invention is constructed with preparing plant extracts containing plenty of bioflavonoid and phenolic antioxidant substances capable of incorporating to meat products; preparing plant powders capable of incorporating to meat products; preparing composite extracts and powders of plant reinforced with diet fibers; preparing seasonings useful for preventing fatness and hyperlipidemia, and then investigating effects on prevention of fatness and hyperlipidemia and performing a sensory evaluation; preparing hamburger for preventing fatness and hyperlipidemia, and then investigating effects on prevention of fatness and hyperlipidemia and performing a sensory evaluation; preparing sirloin, rib and roast meat of beef for preventing fatness and hyperlipidemia, and then investigating effects on prevention of fatness and hyperlipidemia and performing a sensory evaluation; preparing pork such including boned rib for preventing fatness and hyperlipidemia, and then investigating effects on prevention of fatness and hyperlipidemia and performing a sensory evaluation; preparing chicken, duck meat. mutton for preventing fatness and hyperlipidemia, and then investigating effects on prevention of fatness and hyperlipidemia and performing a sensory evaluation; preparing processed meat products for preventing fatness and hyperlipidemia, and then investigating effects on prevention of fatness and hyperlipidemia and performing a sensory evaluation; preparing dairy products for preventing fatness and hyperlipidemia, and then investigating effects on prevention of fatness and hyperlipidemia and performing a sensory evaluation; preparing tomato seasonings added with flavors and spices for prevention of fatness and hyperlipidemia, and then investigating effects on prevention of fatness and hyperlipidemia and performing a sensory evaluation; and preparing meat products with ginsengs for preventing fatness and hyperlipidemia, and then investigating effects on prevention of fatness and hyperlipidemia and performing a sensory evaluation.

The present invention will provide method for adding powders or extracts of ordinary fruit or vegetable useful for preventing fatness and hyperlipidemia direct into meats(beef, pork, chicken, duck meat, mutton etc.) or mixing them with meats, and meat product prepared thereby. The present invention will also provide method for adding seasonings including said extracts of ordinary fruit or vegetable directly into meats or mixing those with meats, and meat product prepared thereby.

In addition, the present invention will provide method for adding said powders or extracts of plants directly into processed meat products(hamburger, sausage, hot-dug, bacon, sealed meat, etc.), and processed meat products prepared thereby.

Furthermore, the present invention will provide method for adding said powders or extracts of plants useful for preventing antifatness and heart disease directly into dairy products(milk, yogurt, ice-cream, cheese etc.), and dairy products prepared thereby.

### 1. Plants and its substances for preventing fatness and hyperlipidemia

Substances useful for preventing fatness and heart disease in the present invention include diet fibers, bioflavonoids and polyphenols from fruits and vegetables.

Bioflavonoid substances contained in extracts of citrus peels are demonstrated as the following Table 1.

**[Table 1]**

| Grapefruit | Lemon | Orange | citrus |
|---|---|---|---|
| | Apigenin | | |
| Apigenin | Apigenin 7- | | |
| Dihydrokaempferol | rutinoside | Auranetin | |
| Eridictyol | Chrysoeriol | Isosakuranetin 7- | |
| Hesperetin | Diosmin | rutinoside | |
| Hesperidin | Eriocitrin | Naringin | |
| Isorhamnetin | Hesperidin | Neohesperidin | Hesperidin |
| Isosakuranetin | Isorhamnetin | Nobiletin | Nobiletin |
| Kempferol | Limocitrin | Rutin | Tangeretin |
| Naringenin | Limocitrol | Sinensetin | |
| Naringin | Luteolin 7- | Tangeretin | |
| Neohesperidin | rutinoside | Vitexin | |
| Poncirin | Naringin | Hesperidin | |
| Quercetin | Neohesperidin | | |
| Rutin | Poncirin Quercetin | | |

Fruits and vegetables contain plenty of diet fibers, bioflavonoid and phenolic substances include leek, onion, onion leaves, garlic, ginger, jujube, ginseng(dried ginseng, fresh ginseng and camphor etc.), citrus peel(dried citrus peel, fresh citrus peel, orange peel, grapefruit peel, lemon peel, citron peel, tangerine peel etc.), leaves of green tea, cinnamon, coffee bean, coffee beans peel, persimmon, persimmon leaves, buckwheat leaves, buckwheat flowers, Chinese matrimony vine, Chinese matrimony vine leaves, grape, blueberry, bean sprouts, dropwort, scallion, alfalfa, fennel, Stevia leaves, cabbage leaves, apple foil, strawberry, wild berry (*Rubus Coreanus*), sea weeds(brown sea weed, sea tangle, laver etc.), tomato. Especially, persimmon leaves contain flavonoid, astragarin, miristirin, tannin, phenols, kagumines etc., buckwheat leaves contain rutin and kercetin. Chinese matrimony vine leaves contain betain and tannin etc., green tea leaves contain various kind of catechin, phenolic substances, and tomato contain lycopene etc.

### 2. Method for processing of Plant substances

### 1) Powdering process

In order to make the said plants into powder, it can be possible to dry them with an ordinary drying process (lyophilization, hot air drying, natural drying in the shade at room temperature), and then to be powdered more minutely.

The said plants used in the present invention can be also powdered by powdering machine. Also, the said plants can be powdered independently and then mixed together, or they can be mixed in constant ratio and then powdered.

### 2) Extraction with boiling water

In order to prepare extracts of the said plants, the said plants were mixed with water in the ratio of 1:10 to 4:10 and extracted at 100 °C for 2 to 8 hours, and then condensed the extracts to use or dried after condensing.

More specifically, 100 to 300g of the said plants can be added in dry state into 1,000 mℓ of water in boiling water extractor and extracted at 100 °C for 2 to 8 hours, and then condense the extracts to 30-50 brix and refrigerated to use, or dry-powdered the extracts to use. It is also possible to extract said plants independently or mix each other.

### 3) Ethanol Extraction

In order to make ethanol extracts of the said plants, the plants can be added into 60-95% of ethanol in the ratio of 1:10 to 4:10, and extracted at 60°C to 80°C for 1 to 8 hours.

### 3. Method for treating meat product, processed meat product and dairy product with plants or its substances for preventing fatness and hyperlipidemia

In order to treat meats by adding powders or extracts of plants including the above substances for preventing fatness and hyperlipidemia direct into meat, it is possible to administrate(using an injection syringe etc.) minute powders or extracts into fatty meats such as sirloin of beef, rib of beef, beef steak or roast meat of beef.

It can also be possible to apply above method to pork such as boned rib of pork or other pork.

In case of chicken, the above powders or extracts can be administrated direct into fresh chicken and cooked.

It can also be possible to apply above method to mutton or duck meat.

In order to make ill-tasting part of meat into delicious, to reduce a bad smell of meat, and to enhance effects on antifatness and prevention of cardiovascular disease, it can be possible to soak beef, pork, mutton or duck meat piece of suitable size into seasoning liquids containing powders or extracts of plants with such effect for regular times, and keep them in freezed packing, and then use to cooking.

In case of using plant powders, with administrating or adsorbing 20g to 200g of plant powders into 1kg of meats and then intaking, antifatness effect can be achieved. On this occasion, 4 to 40g of antifatness plant powders per 200g of meat will be taken. Beef, pork, duck meat, chicken and mutton can be treated. In processed meat products, it can be also possible to mixed the plant powders with processed meat such as meat for hamburger, sausage, hot-dog, Ham, bacon and sealed meat.

In case of using boiling water extracts of plant, 0.5 to 100g of extracts can be administrated in the form of liquid or powder thereof into 1kg of beef, duck meat, chicken, mutton and pork and then cooked. On this occasion, it will be taken 0.1 to 20mg of antifatness extract per 200g of meats. In processed meat products, meat for hamburger, sausage, hot-dog, ham, bacon and sealed meat can be treated similarly. In dairy product, the above extracts can be added during the making process of milk, ice-cream, yogurt or cheese.

It is reported that bioflavonoid disomin, neohesperedin, naringin and hesperedin etc. from citrus have effects on prevention of hyperlipidemia, function of antidiabetes and anticancer. Taking the above bioflavonoid or phenolic plant substances daily in amount of 50 to 1,000mg, fatness and hyperlipidemia can be prevented, and also taking composite extracts daily in amount of 0.1g to 10g, fatness and hyperlipidemia can be prevented. It can be possible to administrate 50 to 5,000 mg of the above substances into 1 kg of meat and cook. It will be taken 10 to 1,000 mg of bioflavonoid per 200g of "Well-being" meat prepared above.

It is reported that rutin and kesertin are abundant in buckwheat and inner onion have effects on prevention of hyperlipidemia and anti-diabetes. These substances can be administrated in amount of 50 to 5,000 mg to 1kg of meat. Cinnamic acid abundant in cinnamon, coffee bean or coffee nuts peel have effects on prevention of hyperlipidemia, it can be administrated in amount of 50∼5,000 mg to 1kg of meat. Phenolic compound such as tannin, elagraic acid, garlic acid or catechin abundant in green tea, persimmon leaves or other vegetables have effect on prevention of hyperlipidemia, it can be administrated in amount of 50∼5,000 mg into 1kg of meat. Antioxidant substances so called antocyanin and bioflavonoid in grape have effects on prevention of heart disease.

Upon considering the above context, substances such as hesperidin naringin, diosmin, neohesperedin, rutin, kecertin, cinnamic acids, elagric acids, anthocianin, tannin, garlic acid or catechin etc. can be administrated separately or mixed each other in amount of 50 to 5,000 mg into 1kg of meat (beef, pork, duck meat, chicken or mutton), or processed meat (hamburger, ham, sausage, hot-dog, bacon or sealed meat) to produce "Well-being" bland product.

In the same manner, those substances can be administrated into the making process of milk, yogurt, ice-cream or cheese to produce "Well-being" bland products.

Bioflavonoid substances from citrus peels can also be used as above.

### 4. Additives

As adding the above extracts into meat, processed meat products or dairy products, other additives can be added in consideration of taste and flavor.

For example, pepper-bean or pepper-dust for a hot taste, or tomato sauces or extracts for tomato flavor can be added, and Vitamin such as Vitamin C, E, D or A, amino acid, selenium (Se) can be also added as supplements. Selenium is preferred to add in the range of 50 to 200 µg as recommended daily allowance.

### 5. Preparation of composite extracts and powders of plant enhanced with diet fibers

According to the research of the present inventors, plants having effects on prevention of hyperlipidemia or containing diet fiber abundantly are listed as followings:
As disclosed in Korean Patent Application No. 10-2003-0026981, Green perilla leaves, sweet potato leaves, red pepper leaves, pumpkin leaves, cowpea leaves, bean leaves, barley leaves, wheat leaves, oats leaves, mulberry leaves, aster leaves, Rough asters, bellflowers, balloon flowers, *Codonopis lanceolata, Amarantus Lividus, Portulaca oleracea,* sedum, lettuce, Korean wild lettuce, shepherd's purse, *Pimpinella brachycarpa,* earth fatsia, Solomon's seal root, plan-tain, wormwood, dandelions, *Salicornia herbacea,* chicory, celery, parsley, cabbage, Chinese cabbage, radish leaves, red radish leaves, carrot, carrot leaves, spinach leaves, broccoli and broccoli leaves, cauliflower and cauliflower leaves, Angelica, dropwort leaves, leek, onion and onion leaves, scallion leaves, crown-daisy, garlic leaves, taro leaves, mallow, chard, red leaf mustard, lettuce, aloe, cactus, radish, alfalfa, beet, asparagus, kale, Chinese Flat Cabbage, blue mustard, red mustard, leaf angelica, burdock, butterbur, Pohyangcho, bean sprouts, rosemary, sage, green tea leaves, dill, fennel leaves and seed, stevia leaves, grape, blueberry, apple foil, brown seaweed, tangle, seaweed, algae seaweed, eatable mushroom such as *Lentinus edodes* etc. are included

Above plants independently or mixed each other can be boiling water extracted at 100°C for 1 to 5 hours. On this occasion, mixing ratio with water is 10:1 and 10:3.

The above obtained extracts contain Vitamin, inorganic salts, bioflavonoids, phenolic antioxidant substances.

The above plants can be dried, and independently or mixed each other can be powdered minutely. The obtained powders contain diet fiber abundantly.

If those extracts or powders of plant are administrated into fatty meats for food, it can be altered into "Well-being" bland meats containing diet fiber abundantly which reduce an evil effect of fatty meat.

In case of using plant powders as a source of diet fibers, it is preferred to amount of 5 to 50 g a day. Accordingly, in case of eating above substances direct adding to meats or adding to seasonings and then mixing them with meats, it is preferred to administrate or mix plant powders in amount of 5 to 50g into 200g of meat.

### 6. Preparation of seasonings for preventing fatness and hyperlipidemia

As taking meats such as beef, mutton, duck meat, chicken or pork, the preference may be lowered because of its ill tasting, odor or tough tasting by the part. In this time, in order to increase the taste of meat, it can be possible to treat with spices, flavors or fruit juice for tenderizing and make them into frozen meat to sell. Furthermore, by using seasonings containing bioflavonoid useful for preventing hyperlipidemia, it can be produced "Well-being" bland meat products having enhanced taste and flavors as well as beneficial to the health.

The present inventors have been patented as to "Health improving spices composition using garlic, onion, ginger, citrus peel extracts, jujube or green tea extracts etc."(Korean Patent No.428936)

In the present invention, by mixing other plants with optimum ratio in addition to the above plants, it can be possible to make seasoning compositions which diminish odor of meats, especially pork, and are superior to increase a taste, as well as have effects on prevention of hyperlipidemia and diabetes in comparison to the above patented seasoning composition. Additionally, as the result of a sensory evaluation to the barbecued pork adding the seasonings composition of the present invention, it can be confirmed that pork products having good taste and free from odor were produced.

In this time, it is preferable to add the seasonings compositions in amount of 100 weight parts into 1,000 weight parts of meats. Taste of meat is extremely improved as the above treated meat leaft at room temperature for 2 to 3 hours or at cold temperature for 24 hours and roast.

### 7. Preparation of hamburger for preventing fatness and hyperlipidemia

Adult diseases such as fatness or heart disease et al. can be induced by hamburger with its 25 to 30 % of fat contents.

In order to change ordinary hamburger into "Well-being" hamburger, by mixing plant extracts with anti-fatness substances containing diet fibers abundantly, plant powders containing diet fibers abundantly, or purified bioflavonoid and phenolic substance in the range of 0.1 to 10 weight% with meats for hamburger, it is possible to prevent heart disease, hyperlipidemia or fatness.

It can be used beef, pork, chicken, mutton or duck meat as meat for hamburger, in which meat can be grinded by a grinder to use for hamburger.

A preferred hamburger patty composition can be prepared by mixing 100 weight parts of meat for hamburger, 1.5 weight parts of onion powders, 1.5 weight parts of garlic powders and 1.5 weight parts of ginger powders, and then adding buckwheat powders, persimmon leaves powders and green tea leaves powders in amount of 2 to 10 weight parts independently and adding mixture of powders according to claim 1 in amount of 2 to 10 weight parts. However, it can be also possible to prepare "Well-being" hamburger for preventing fatness and hyperlipidemia by mixing 0.1 to 10 weight parts of antifatness boiling water extracts of plant, antifatness ethanol extracts of plant or purified bioflavonoid and phenolic substances which capable of using in the present invention besides plant powders used above, with 100 weight parts of meats for hamburger.

### 8. Preparation of sirloin, rib and roast meat for preventing fatness and hyperlipidemia

It can be possible to prepare sirloin, rib and roast meat of beef for preventing fatness and hyperlipidemia by administrating plant extracts, plant powders, purified bioflavonoid and phenolic substances, or plant powders containing diet fibers abundantly in amount of 0.1 to 10 weight parts into meats for sirloin, rib and roast meat of beef.

Also, 10 weight parts of meat were digested with 1 weight part of seasonings composition prepared in the present invention and then cooked them.

### 9. Preparation of pork including boned rib for preventing fatness and hyperlipidemia

It can be possible to prepare pork including bacon etc. by treating boned rib or other part of pork with plant extracts, plant powders, purified bioflavonoid and phenolic substances, or plant powders containing diet fibers abundantly etc. which are capable of using in the present invention in amount of 0.1 to 10 weight parts, and the obtained pork can be used in cooking.

### 10. Preparation of chicken, duck meat and mutton for preventing fatness and hyperlipidemia

It can be possible to prepare chicken, duck meat and mutton by treating chicken, duck meat and mutton with plant extracts, plant powders, purified bioflavonoid and phenolic substances, or plant powders containing diet fibers abundantly etc. in amount of 0.1 to 10 weight parts which can be used in the present invention and the obtained meats can be used in cooking.

### 11. Preparation of processed meat product for preventing fatness and hyperlipidemia

It can be possible to prepare processed meat product of "Well-being" bland by adding plant extracts, plant powders, purified bioflavonoid and phenolic substances, or plant powders containing diet fibers abundantly etc. which are capable of using in the present invention in amount of 0.1 to 10 weight parts into processed meat such as ham, sausage, hot-dog or bacons.

It can be also possible to prepare canned meat product for preventing fatness and hyperlipidemia by adding plant extracts, plant powders, purified bioflavonoid and phenolic contents, or plant powders containing diet fibers abundantly etc. which are capable of using in the present invention in amount of 0.1 to 10 weight parts into beef, pork, duck meat and mutton for canned meat.

### 12. Preparation of dairy product for preventing fatness and hyperlipidemia

It can be also possible to prepare "Well-being" dairy product by adding plant extracts, plant powders, purified bioflavonoid and phenolic contents, or plant powders containing diet fibers abundantly etc. which can be used in the present invention in amounts of 0.1 to 10 weight parts into milk, yogurt, ice-cream and cheese during the preparing process.

### 13. Preparation of tomato seasonings adding flavors and seasoning

In order to enhance the taste of rib of beef, leg of chicken, rib of pork, rib of mutton and other meats, it is possible to mix them with seasonings prepared by adding Vitamins, amino acids and seasoning etc.

### Detailed description of the presented embodiment

The present invention is explained in detail by the following examples. However, the examples are provided for illustration of the present invention not for limitation thereof. Detailed description of the present invention is explained by the following examples.

### Example 1 (Out of the scope of the invention): Preparation of plant extracts capable of administrating to meat products and containing bioflavonoid and phenolic antioxidant substances abundantly

Persimmon leaves, persimmon, buckwheat leaves and flowers, Chinese matrimony vine leaves, Chinese matrimony vine, green tea leaves, red pepper, citrus peels(dried peels or fresh peels of one or more selected from a group consisting of tangerine, orange, lemon, grapefruit and citron), tomato, ginseng, grape, blueberry, strawberry, mountain berry (*Rubus coreanus*), cinnamon (cassia bark), coffee beans, bean sprouts, dropwort, scallion, cabbage, ginger, garlic, garlic leaves, leek, onion, onion leaves were added in amount of 200 g as dried form into 1,000 mℓ of water.

The mixture of the above plants and water was extracted with boiling water extractor at 100°C for 3 hours. The obtained extracts were condensed to 30 to 50 brix and then refrigerated, or were refrigerated and then dry-powdered to use.

### Example 2 (Out of the scope of the invention): Preparation of plants powders capable of administrating into meats

Plants as mentioned above Example 1, for example, well-dried persimmon leaves, persimmon, buckwheat leaves and flowers, Chinese matrimony vine leaves, Chinese matrimony vine, green tea leaves, red pepper, citrus peels(dried peels or fresh peels of one or more selected from a group consisting of tangerine, orange, lemon, grapefruit and citron), tomato, ginseng, grape, blueberry, strawberry, mountain berry(*Rubus coreanus*), cinnamon(cassia bark), coffee beans, bean sprouts, dropwort, scallion, cabbage, ginger, garlic, garlic leaves, leek, onion, onion leaves were powdered respectively with powdering machine.

### Example 3: Preparation of composite extracts enhanced with diet fibers

Green perilla leaves, sweet potato leaves, red pepper leaves, pumpkin leaves, cowpea leaves, bean leaves, barley leaves, wheat leaves, oats leaves, mulberry leaves, aster leaves, Rough asters, bellflowers, balloon flowers, *Codonopis lanceolata, Amarantus Lividus, Portulaca oleracea,* sedum, lettuce, Korean wild lettuce, shepherd's purse, *Pimpinella brachycarpa,* earth fatsia, Solomon's seal root, plan-tain, wormwood, dandelions, *Salicornia herbacea,* chicory, celery, parsley, cabbage, Chinese cabbage, radish leaves, red radish leaves, carrot, carrot leaves, spinach leaves, broccoli and broccoli leaves, cauliflower and cauliflower leaves, Angelica, dropwort leaves, leek, onion and onion leaves, scallion leaves, crown-daisy, garlic leaves, taro leaves, mallow, chard, red leaf mustard, lettuce, aloe, cactus, radish, alfalfa, beet, asparagus, kale, Chinese Flat Cabbage, blue mustard, red mustard, leaf angelica, burdock, butterbur, Pohyangcho, bean sprouts, rosemary, sage, green tea leaves, dill, fennel leaves and seed, stevia leaves, grape, blueberry, apple foil, brown seaweed, tangle, seaweed, algae seaweed and *Lentinus edodes* were mixed with each other in amount of 2g and added to 2L of water, and then boiling water extracted at 100°C for 4 hours.

### Example 4 (Out of the scope of the invention): Preparation of the seasonings for preventing fatness and hyperlipidemia

The seasonings composition for preventing fatness and hyperlipidemia were prepared by mixing components listed below Table 2.

**[Table 2]**

| | |
|---|---|
| The components of red peppers seasonings for preventing fatness and hyperlipidemia | |

| component | ratio (weight part) |
|---|---|
| soy sauces | 15.0 |
| pepper-beans | 17.6 |
| Flactooligosaccaride | 18.0 |
| Soju(or wine) | 20.8 |
| black pepper | 0.1 |
| sesame powder | 0.40 |
| sesame oils | 0.70 |
| dried garlic powder | 1.10 |
| dried onion powder | 1.10 |
| ginger powder | 3.60 |
| Lecithin | 3.60 |
| taurine | 3.60 |
| Tangerine peel extract | 3.60 |
| Powder of persimmon leaves extract | 1.80 |
| Powder of buckwheat leaves extract | 1.80 |
| powder of Chinese matrimony vine leaves extract | 3.60 |
| green tea extract | 3.60 |
| Total | 100 |

The seasonings composition containing tomato sauces for preventing fatness and hyperlipidemia were prepared by mixing components listed below Table 3.

**[Table 3]**

| | |
|---|---|
| The components of seasonings composition containing tomato sauces for preventing fatness and hyperlipidemia | |

| Component | ratio (weight part) |
|---|---|
| tomato sauce | 45 |
| onion powder / onion leaves powder | 5 |
| garlic powder | 5 |
| ginger powder | 5 |
| taurine | 5 |
| lecithin | 5 |
| tangerine peel extract | 5 |
| Persimmon leaves extract | 5 |
| Buckwheat leaves extract | 5 |
| Chinese matrimony vine leaves extract | 5 |
| green tea extract | 5 |
| Salt | 5 |
| Total | 100 |

1,000 g of chicken, pork(rib of pork etc.), beef, mutton, duck meat etc. were cut into the size be good to eat and mixed with the above prepared seasonings, and then leaved at room temperature for 2 to 3 hours or at cold temperature (5°C) for 24 hours. The taste and flavor of meats were improved when cooked and ate.

### Experimental example 1 (Out of the scope of the invention): Examination of effects of red pepper seasonings composition on prevention of fatness and hyperlipidemia

The seasoning composition was prepared as described in Korean Patent No.428936 and used as a comparative example. First, leaves of Korean onion, garlic and ginger were peeled off, washed with water. Jujube was also washed with water and the seed removed. Peels of tangerine produced by organic farming techniques without agrochemicals were washed with water. The plant materials obtained above were dried in the shade or in the oven. Dried jujube and tangerine peels were pulverized to powder. 200 g of dried onion, 50 g of dried garlic, 10 g of dried ginger, 80 g of jujube powders and 200 g of tangerine peels were mixed, and 1,000 mℓ of water were added to this mixture, and then the mixture was homogenized with a blender. The above obtained seasoning composition was sterilized at 121 °C or dried and powdered for long term preservation.

The above obtained seasoning composition of comparative example and the red pepper seasonings composition for preventing fatness and hyperlipidemia of Table 2 prepared in example 4 were added respectively in amount of 100 g into 3,000g of boned rib of pork which cut into the size suitable for eating, and leaved at room temperature for 2 to 3 hours. Then, the obtained boned rib of pork was roasted and fed to control group(tasting group of comparative example) and experimental group(tasting group of spice composition of table 2) made of 10 persons respectively every other day in 30 days in amount of 150g at one time for each person. Then, the blood of each person was collected and a comparative analysis was made.

As a result, the experimental group feeding the seasoning composition of table 2 prepared in example 4 had more reduced weight by 0.4 kg on average, body fat by 0.3 kg as average, total cholesterol by 4% as average and total neutral fat by 7% as average than the comparative example. Through the above result, it was confirmed that the seasonings composition of the present invention have effects on preventing fatness and hyperlipidemia.

### Experimental example 2 (Out of the scope of the invention): Sensory evaluation of rep pepper seasonings composition for preventing fatness and hyperlipidemia

The seasonings composition was prepared as described in experimental example 1 and Korean Patent No. 428936 and used for comparative example.

The above obtained seasonings composition of comparative example and the red pepper seasonings composition for preventing fatness and hyperlipidemia of Table 2 prepared in example 4 were added respectively in amount of 100 g into 1,000g of boned rib of pork which cut into the size suitable for eating, and leaved at room temperature for 2 to 3 hours. Then, the obtained boned rib of pork were roasted and carried out a sensory analysis. The results were demonstrated in Table 4 as followings.

**[Table 4]**

| The results of a sensory analysis on the seasonings composition | | | |
|---|---|---|---|
| | taste | flavor | color |
| comparative example 1 | 3.0 | 2.1 | 4.0 |
| red pepper seasonings composition of example 4 | 4.8 | 4.5 | 4.4 |

[Notice] The above score was the arithmetic mean obtained by random sampling of 5 of adult men and women respectively, scoring the grade as very good : 5, good : 4, normal : 3, bad : 2, very bad : 1, and summing up each scores and taking the mean.

### Example 5 (Out of the scope of the invention): Preparation of Hamburger for preventing fatness and hyperlipidemia,

100 weight parts of meats for hamburger made by grinding pork with grinder, 1.5 weight parts of onion powders, 1.5 weight parts of garlic powders and 1.5 weight parts of ginger powders were mixed to make a first meat composition. Then, plant powders including 1.5 weight parts of buckwheat powders, 1.5 weight parts of persimmon powders, 1.5 weight parts of Chinese matrimony vine leaves powders and 1.5 weight parts of green tea leaves powders were mixed with the above first meat composition to prepare meat composition for hamburger patty. The constituent components of the above obtained meats patty composition for hamburger were demonstrated in Table 5 as followings.

**[Table 5]**

| Preparation example of meats composition for hamburger patty for preventing fatness and hyperlipidemia | |
|---|---|
| component | ratio (weight part) |
| meat for hamburger | 100 |
| onion powders | 1.5 |
| garlic powders | 1.5 |
| ginger powders | 1.5 |
| buckwheat leaves powders | 1.5 |
| persimmon leaves powders | 1.5 |
| powders of Chinese matrimony vine leaves | 1.5 |
| powders of green tea leaves | 1.5 |

### Experimental example 3 (Out of the scope of the invention): Examination of effects of meats composition for hamburger patty on prevention of fatness and hyperlipidemia

By using the meat composition consisting of only meat for hamburger as comparative example and the meat composition for hamburger patty consisting of components as demonstrated in Table 5, hamburgers were prepared by the usual methods by including 100 g of meat in each hamburger meat patty.

The above prepared hamburgers were fed to control group(tasting group of comparative example) and experimental group(tasting group of hamburger using the meats composition for hamburger patty of Table 5) made of 10 persons respectively in the method to give a piece at one time for each person every other day for 30 days. Then, blood was collected from each person and a comparative analysis was made.

As a result, the experimental group feeding hamburger using meats patty composition for hamburger prepared in example 5 had more reduced weight by 0.6 kg on average, body fat by 0.4 kg on average, total cholesterol by 7% on average and total neutral fat by 10% on average than the comparative example. By the above result, it was confirmed that the meat composition for hamburger patty of the present invention have effects on prevention of fatness and hyperlipidemia.

### Experimental example 2 (Out of the scope of the invention): Sensory evaluation of hamburger for preventing fatness and hyperlipidemia

By using the meats composition consisted of only meat for hamburger as comparative example and the meats composition for hamburger patty consisted of components as demonstrated in Table 5, hamburgers were prepared by the usual method to be included 100 g of meat in each hamburger meats patty.

A sensory analysis was carried out using the above prepared hamburgers. The results were demonstrated in table 6 as followings.

**[Table 6]**

| The results of a sensory analysis to hamburger | | | |
|---|---|---|---|
| | taste | flavor | color |
| hamburger of comparative example | 3.2 | 3.0 | 3.5 |
| hamburger using the meat composition for hamburger patty of Table 5 | 4.8 | 4.8 | 4.0 |

[Notice] The above score was the arithmetic mean obtained by random sampling of 5 of adult men and women respectively, scoring the grade as very good : 5, good : 4, normal : 3, bad : 2, very bad : 1, and summing up each score and taking the mean.

### Example 6: Preparation of sirloin, rib and roast meat for preventing fatness and hyperlipidemia

### 1) Sirloin

The sirloin for preventing fatness and hyperlipidemia was prepared by adding extracts prepared in example 3 into 100 weight parts of beef sirloin

### 2) Rib

The rib for preventing fatness and hyperlipidemia was prepared by mixing 2 weight parts of dropwort extracts, 2 weight parts of scallion extracts and 3 weight parts of tangle extracts among the dry-powdered extracts prepared in example 1 with 100 weight parts of ordinary rib seasonings and adding into 1,000 weight parts of pork rib.

### 3) Roast meat

The roast meat for preventing fatness and hyperlipidemia was prepared by mixing 10 weight parts of extracts prepared in example 2 with 100 weight parts of ordinary roast meat seasonings and adding into 1,000 weight parts of beef for roast meat.

### Experimental example 5: Examination of effects of meats of the present invention on prevention of fatness and hyperlipidemia

The sirloin, rib and roast meat adding plant extracts or powders of the present invention prepared in example 6 and meats without adding them were cooked and roasted with the ordinary method, and then fed to control group (tasting group of meats without adding plant extracts or powders) and experimental group (tasting group of meats of example 6) made of 10 persons respectively in the method to give in amount of 150 g at one time for each person every other day for 30 days. Blood samples were collected from each person and made a comparative analysis.

As a result, the experimental group feeding sirloin, rib and roast meat prepared in example 6 were more reduced weight respectively by 0.5 kg, 0.6 kg and 0.4 kg as average, body fat by 0.3, 0.4, 0.3 kg as average, total cholesterol by 4, 5 and 3 % as average and total neutral fat by 7, 9 and 50% as average than that of the comparative example. Through the above result, it was confirmed that meats of the present invention have effects on prevention of fatness and hyperlipidemia.

### Experimental example 6: Sensory evaluation of meats of the present invention prepared in example 6

The sirloin, rib and roast meat adding plants extracts or powders of the present invention prepared in example 6 and meats without adding plants extracts or powders as comparative example were cooked and roasted with the ordinary method and then a sensory evaluation was carried out. The results were demonstrated in Table 7 as followings.

**[Table 7]**

| The results of sensory analysis to meats | | | | |
|---|---|---|---|---|
| | | taste | flavor | color |
| sirloin | comparative example | 3.2 | 3.0 | 3.5 |
| | example 6 | 4.5 | 3.9 | 3.7 |
| rib | comparative example | 3.5 | 3.6 | 3.2 |
| | example 6 | 4.6 | 4.0 | 3.8 |
| roast meat | comparative example | 3.9 | 4.1 | 3.5 |
| | example 6 | 4.8 | 4.5 | 4.5 |

[Notice] The above score was the arithmetic mean obtained by random sampling of 5 of adult men and women respectively, scoring the grade as very good : 5, good : 4, normal : 3, bad : 2, very bad : 1, and summing up each score and taking the mean.

### Example 7 (Out of the scope of the invention): Preparation of pork such as boned rib etc. for preventing fatness and hyperlipidemia

Boned ribs for preventing fatness and hyperlipidemia were prepared by treating 100 weight of boned rib with 2 weight parts of apple foils extracts, mountain berry extracts and 2 weight parts of tangle extracts among dry-powdered extracts prepared in example 1

### Experimental example 7 (Out of the scope of the invention): Examination of effect and Sensory evaluation of pork prepared in example 7

Examination of effect and Sensory evaluation of pork prepared in example 7 were carried out as described in experimental example 5 and 6.

As a result, pork prepared in example 6 was more reduced weight by 1.0 kg as average, body fat by 0.9 kg as average, total cholesterol by 10 % as average and total neutral fat by 12 % as average than that of pork without treating with plants extracts and were superior in taste, flavor and color in sensory evaluation. Through the above result, it was confirmed that pork according to example 7 has an effect on preventing fatness and hyperlipidemia.

### Example 8: Preparation of chickens, duck meats and muttons for preventing fatness and hyperlipidemia

Chickens for preventing fatness and hyperlipidemia were prepared by treating 100 weight parts of chickens with 7 weight parts of extracts prepared in example 3. Duck meats and muttons can also be prepared as described above.

### Experimental example 8: Examination of effect and Sensory evaluation of chicken, duck and mutton meat prepared in example 8

Examination of effect and Sensory evaluation of chickens, duck meats and muttons prepared in example 8 were carried out as described in experimental example 5 and 6. As a result, chickens, duck meats and muttons in example 6 were more reduced weight respectively by 0.6, 0.8 and 0.7 kg as average, body fat by 0.5, 0.6 and 0.9 kg as average, total cholesterol by 5, 8 and 7 % as average and total neutral fat by 8, 10 and 9 % as average than that of chickens, duck meats and muttons without treating with plants extracts and were superior in taste, flavor and color in sensory evaluation.

### Example 9 (Out of the scope of the invention). Preparation of processed meats product for preventing fatness and hyperlipidemia

### 1) Ham

Ham for preventing fatness and hyperlipidemia was prepared by treating 100 weight parts of meats for preparing ham with 3 weight parts of tangle extracts and 2 weight parts of scallion extracts prepared in example 1.

### 2) Canned meat

Canned meats were prepared by treating 100 weight parts of chickens with 7 weight parts of extracts prepared in example 3.

### Experimental example 9 (Out of the scope of the invention): Examination of effect and Sensory evaluation of ham and canned meats prepared in example 9

Examination of effect and Sensory evaluation of ham and canned meats prepared in example 9 were carried out as described in experimental example 5 and 6. As a result, ham and canned meats in example 9 were more reduced weight respectively by 0.9 and 0.7 kg as average, body fat by 0.9 and 0.6 kg as average, total cholesterol by 8 and 7 % as average and total neutral fat by 10 and 9 % as average than that of ham and canned meats without treating with plants extracts and were superior in taste, flavor and color in sensory evaluation.

### Example 10. Preparation of dairy product for preventing fatness and hyperlipidemia

### 1) Milk

Milk for preventing fatness and hyperlipidemia was prepared by treating 100 weight of milk with 0.5 weight parts of extracts prepared in example 3.

### 2) Yogurt

Yogurt for preventing fatness and hyperlipidemia was prepared by adding 100 weight of yogurt with 1 weight part of extracts prepared in example 3.

### Experimental example 10: Examination of effects and Sensory evaluation of milk and yogurt prepared in examples 10 on prevention of fatness and hyperlipidemia

Examination of effects and Sensory evaluation of milk and yogurt prepared in example 9 on prevention of fatness and hyperlipidemia were carried out as described in experimental example 5 and 6. As a result, milk and yogurt in example 9 were more reduced weight respectively by 1.2 and 0.7 kg as average, a body fat by 0.9 and 0.8 kg as average, total cholesterol by 10 and 9 % as average and total neutral fat by 12 and 9 % as average than that of ham and canned meats without treating with plants extracts and were superior in taste, flavor and color in sensory evaluation.

### Example 11 (Out of the scope of the invention): Preparation of tomato seasonings containing flavors and spices for preventing fatness and hyperlipidemia

Tomato seasonings containing flavors and spices for preventing fatness and hyperlipidemia were prepared by mixing components demonstrated in Table 8.

**[Table 8]**

| Tomato seasonings containing flavors and spices for preventing fatness and hyperlipidemia | |
|---|---|
| components | ratio (weight part) |
| tomato sauces | 50 |
| Vitamin C | 5 |
| Taurine | 5 |
| black peppers | 5 |
| Salt | 5 |
| buckwheat leaves | 5 |
| garlic | 5 |
| onion | 5 |
| ginger | 5 |
| citrus peel extracts | 5 |
| corn syrup(fructose) | 5 |
| Total | 100 |

### Experimental example 11 (out of the scope of the invention): Examination of effect and Sensory evaluation of tomato seasonings composition prepared in example 11 on prevention of fatness and hyperlipidemia

Tomato seasoning composition of example 11 were prepared, and, as comparative example, tomato seasonings composition were prepared except buckwheat, garlic, onion, ginger and citrus extracts among tomato seasonings composition of example 11, and spaghetti were prepared with these two seasonings compositions, and then examination of effects and Sensory evaluation of spaghetti on prevention of fatness and hyperlipidemia were carried out as described in experimental example 5 and 6. As a result, spaghetti prepared with seasoning composition in example 1 were more reduced weight respectively by 1.2 kg as average, a body fat by 1.0 kg as average, total cholesterol by 11 % as average and total neutral fat by 13 % as average than that of spaghetti without treating with plants extracts and were superior in taste, flavor and color in sensory evaluation.

### Example 12 (out of the scope of the invention): Preparation of meats product for preventing fatness and hyperlipidemia with ginseng capable of administering to all kind of meats

Jowl for preventing fatness and hyperlipidemia were prepared by mixing 2 weight parts of ginseng extracts, 3 weight parts of Chinese matrimony vine leaves extracts, 2 weight parts of mountain berry (*Rubus Coreanus*) and 3 weight parts of citrus peel extracts among dry-powdered extracts prepared in example 1 and treating 100 weight parts of jowl with the above extracts mixture. Such obtained meats have no odor peculiar to pork as well as can prevent fatness and hyperlipidemia.

### Experimental example 12 (out of the scope of the invention): Examination of effects and Sensory evaluation of meat product prepared in example 12 on prevention of fatness and hyperlipidemia

Jowl of example 12, and, as comparative example, jowl without treating with plant extracts were prepared, and then examination of effects and Sensory evaluation of jowl on prevention of fatness and hyperlipidemia were carried out as described in experimental examples 5 and 6. As a result, jowl in example 12 were more reduced weight by 1.0 kg on average, body fat by 0.8 kg on average, total cholesterol by 10 % on average and total neutral fat by 11 % on average than that of jowl without treating with plants extracts or powders and were superior in taste, flavor and color in sensory evaluation.

### INDUSTRIAL APPLICABILITY

As explained by way of above examples, meats products, meat processed products and dairy products for fatness and hyperlipidemia of the present invention have excellent effects on prevention of fatness and hyperlipidemia, thereby they are prominent invention for food and health food industry, because meat products, processed meat products and dairy products were treated with powders, boiling water extracts or ethanol extracts of plants or plants mixture containing bioflavonoid line substances, polyphenolic substances or diet fibers abundantly.

## Claims

1. A food for use in a method for preventing fatness and hyperlipidemia, the food comprising dried powders, boiling water extracts or ethanol extracts of green perilla leaves, sweet potato leaves, red pepper leaves, pumpkin leaves, cowpea leaves, bean leaves, barley leaves, wheat leaves, oats leaves, mulberry leaves, aster leaves, Rough asters, bellflowers, balloon flowers, Codonopis lanceolata, Amarantus Lividus, Portulaca oleracea, sedum, lettuce, Korean wild lettuce, shepherd's purse, Pimpinella brachycarpa, earth fatsia, Solomon's seal root, plan-tain, wormwood, dandelions, Salicornia herbacea, chicory, celery, parsley, cabbage, Chinese cabbage, radish leaves, red radish leaves, carrot, carrot leaves, spinach leaves, broccoli and broccoli leaves, cauliflower and cauliflower leaves, Angelica, dropwort leaves, leek, onion and onion leaves, scallion leaves, crown-daisy, garlic leaves, taro leaves, mallow, chard, red leaf mustard, lettuce, aloe, cactus, radish, alfalfa, beet, asparagus, kale, Chinese Flat Cabbage, blue mustard, red mustard, leaf angelica, burdock, butterbur, Pohyangcho, bean sprouts, rosemary, sage, green tea leaves, dill, fennel leaves and seed, stevia leaves, grape, blueberry, apple foil, brown seaweed, tangle, seaweed, algae seaweed and Lentinus edodes.

2. A food for preventing fatness and hyperlipidemia according to claim 1, **characterized in that** the food further comprises extracts of one or more plants selected from persimmon leaves, buckwheat leaves, Chinese matrimony vine leaves, and citrus peels.

3. A food for preventing fatness and hyperlipidemia according to claim 1, **characterized in that** the food is any one of food selected from the group consist of beef, pork, chicken, mutton, duck meat, meats patty for hamburger, ham, sausage, hot-dog, bacon, milk, yogurt, icecream and cheese.

4. A food for preventing fatness and hyperlipidemia according to claim 1, **characterized in that** the said boiling water extracts is prepared by mixing the said plants with water in the ratio of 1:10 to 4:10 and extracting at 100 °C for 2 to 8 hours.

5. A food for preventing fatness and hyperlipidemia according to claim 1, **characterized in that** the said ethanol extracts is prepared by adding the said plants into 60 to 95 % of ethanol in the ratio of 1:10 to 4:10 and extracting at 60 to 80 °C for 1 to 8 hours.

6. A method for preparing food for preventing fatness and hyperlipidemia, in which dried powders, boiling water extracts or ethanol extracts of plants according to claim 1 is added into any one of food selected from the group consist of beef, pork, chicken, mutton, duck meat, meats patty for hamburger, ham, sausage, hot-dog, bacon, milk, yogurt, ice-cream and cheese.

7. A method for preparing food for preventing fatness and byperlipidemia according to claim 6, **characterized in that** any one of those selected from the group consist of pepper-bean, pepper-dust, tomato sauces, tomato extracts, vitamins, amino acids, selenium (Se) are added additionally together with dried powders, boiling water extracts or ethanol extracts of plants.

8. A food for preventing fatness and hyperlipidemia according to claim 1 or claim 2, **characterized in that** the said food are consisted of 15.0 weight parts of soy sauce, 17.6 weight parts of pepper-bean, 18.0 weight parts of Flactooligosaccaride, 20.8 weight parts of Soju or wine, 0.1 weight parts of black pepper, 0.40 weight parts of sesame powders, 1.10 weight parts of dried garlic powders, 1.10 weight parts of dried onion powders, 3.60 weight parts of ginger powders, 3.60 weight parts of lecithin, 3.60 weight parts of taurine, 3.60 weight parts of tangerine peel extracts, 3.60 weight parts of powders of persimmon leaves extracts, 1.80 weight parts of powders of Chinese matrimony vine leaves extracts and 3.60 weight parts of green tea extracts.

9. A food for preventing fatness and hyperlipidemia according to claim 1 or claim 2, **characterized in that** the said food are consisted of 45 weight parts of tomato sauces, 5 weight parts of onion powders, 5 weight parts of ginger powders, 5 weight parts of taurine, 5 weight parts of lecithin, 5 weight parts of tangerine peel extracts, 5 weight parts of persimmon leaves extracts, 5 weight parts of buckwheat leaves extracts, 4 weight parts of Chinese matrimony vine leaves extracts, 5 weight parts of green tea extracts and 5 weight parts of salt.

10. A food for preventing fatness and hyperlipidemia according to claim 1 or claim 2, **characterized in that** the said food are meats patty composition for hamburger for preventing fatness prepared by mixing 100 weight parts of meats for hamburger, 1.5 weight parts of onion powders, 1.5 weight parts of garlic powders and 1.5 weight parts of ginger powders and then adding any one of those selected from the group consist of buckwheat powders, persimmon leaves powders and powders of green tea leaves in amount of 2 to 10 weight parts.

11. A food for preventing fatness and hyperlipidemia according to claim 1 or claim 2, **characterized in that** the said food are seasonings composition for preventing fatness and hyperlipidemia consisted of 50 weight parts of tomato sauce, 5 weight parts of Vitamin C, 5 weight parts of taurine, 5 weight parts of black pepper, 5 weight parts of salt, 5 weight parts of buckwheat leaves, 5 weight parts of garlic, 5 weight parts of onion, 5 weight parts of ginger, 5 weight parts of citrus peels extracts and 5 weight parts of corn syrup.

12. A food for preventing fatness and hyperlipidemia according to claim 1 or claim 2, **characterized in that** the said food are seasonings composition for preventing fatness and hyperlipidernia consisted of 2 weight parts of ginseng extracts, 3 weight parts of Chinese matrimony vine leaves extracts, 2 weight parts of mountain berry extracts and 3 weight parts of citrus peels extracts.

## Patentansprüche

1. Nahrungsmittel zur Verwendung bei einem Verfahren zur Vorbeugung gegen Fettleibigkeit und Hyperlipidämie, wobei das Nahrungsmittel Folgendes aufweist: getrocknete Pulver, Dekokte oder Ethanolextrakte von Schwarznesselblättern, Blättern der Süßkartoffel, der roten Paprika, des Kürbis, der Kuhbohne, der Bohne, der Gerste, des Weizens, des Hafers, der Maulbeere, der Aster, der Rough-Aster, Blätter von Glockenblumen, von chinesischen Glockenblumen, von Glockenblumengewächsen, von Gemüseamarant, von Gemüseportulak, von Fetthenne, grünen Salat, koreanischen wilden Salat, Hirtentäschel, pimpinella brachykarpa, Erdaralie, Weißwurz, Kochbananen, Wermutkraut, Löwenzahn, salicornia herbacea, Chicoree, Sellerie, Petersilie, Weißkohl, Chinakohl, Rettichblätter, Blätter des roten Rettichs, Karotten, Karottenblätter, Spinatblätter, Brokkoli und Brokkoliblätter, Blumenkohl und Blumenkohlblätter, Engelwurz, Blätter des kleinen Mädchensüß, Lauch, Zwiebeln und Zwiebelblätter, Frühlingszwiebelblätter, Galant-Chrysanthemen, Knoblauchblätter, Wasserbrotwurzelblätter, Malve, Mangold, rotblättrigen Senf, Lattich, Aloe, Kaktus, Rettich, Alfalfa, Runkelrübe, Spargel, Grünkohl, Chinaflachkohl, Zart-Gliederschote, roten Senf, Blätter von Engelwurz, große Klette, Pestwurz, Pohyangcho, Bohnensprossen, Rosmarin, Salbei, grüne Teeblätter, Dill, Fenchelblätter und -samen, Süßkrautblätter, Traube, Heidelbeere, Apfelblatt, Seetang, Tang, Meeresalgen, Algen und Shiitake Pilze.

2. Nahrungsmittel zum Vorbeugen gegen Fettleibigkeit und Hyperlipidämie nach Anspruch 1, **dadurch gekennzeichnet, dass** das Nahrungsmittel außerdem Extrakte einer oder mehrerer Pflanzen aufweist, welche unter Sharonfruchtblättern, Buchweizenblättern, Blättern des gemeinen Boxdorn und Zitronenschalen ausgewählt sind.

3. Nahrungsmittel zum Vorbeugen gegen Fettleibigkeit und Hyperlipidämie nach Anspruch 1, **dadurch gekennzeichnet, dass** das Nahrungsmittel ein Nahrungsmittel ist, welches aus der Gruppe ausgewählt ist, welche aus Rind-, Schweine-, Hühner-, Schaf- oder Entenfleisch, Fleischbratlingen für Hamburger, Schinken, Würstchen, Hot-Dogs, Bacon, Milch, Joghurt, Eis und Käse besteht.

4. Nahrungsmittel zum Vorbeugen gegen Fettleibigkeit und Hyperlipidämie nach Anspruch 1, **gekennzeichnet dadurch, dass** die Dekokte durch Mischen der Pflanzen mit Wasser im Verhältnis von 1:10 bis 4:10 und Extrahieren bei 120 °C für zwei bis acht Stunden hergestellt werden.

5. Nahrungsmittel zum Vorbeugen gegen Fettleibigkeit und Hyperlipidämie nach Anspruch 1, **gekennzeichnet dadurch, dass** die Ethanolextrakte durch Eingeben der Pflanzen in 60 bis 95 % Ethanol im Verhältnis von 1:10 bis 4:10 und Extrahieren bei 60 bis 80 °C für eine bis acht Stunden hergestellt werden.

6. Verfahren zum Herstellen einer Nahrung zum Vorbeugen gegen Fettleibigkeit und Hyperlipidämie, bei welchem getrocknete Pulver, Dekokte oder Ethanolextrakte von Pflanzen gemäß Anspruch 1 irgendeinem Nahrungsmittel zugefügt werden, welches aus der Gruppe ausgewählt ist, welche aus Rind-, Schweine-, Hühner-, Schaf- oder Entenfleisch, Fleischbratlingen für Hamburger, Schinken, Würstchen, Hot-Dogs, Bacon, Milch, Joghurt, Eis oder Käse besteht.

7. Verfahren zum Herstellen einer Nahrung zum Vorbeugen gegen Fettleibigkeit und Hyperlipidämie nach Anspruch 6, **dadurch gekennzeichnet, dass** irgendein aus der Gruppe ausgewählter Gegenstand, die aus Paprikabohnen, Paprikapulver, Tomatensoßen, Tomatenextrakten, Vitaminen, Aminosäuren, Selen (Se) besteht, zusätzlich zusammen mit getrockneten Pulvern, Dekokten oder Ethanolextrakten von Pflanzen zugefügt werden.

8. Nahrungsmittel zum Vorbeugen gegen Fettleibigkeit und Hyperlipidämie, nach Anspruch 1 oder Anspruch 2, **dadurch gekennzeichnet, dass** das Nahrungsmittel aus 15,0 Gewichtsanteilen Sojasoße, 17,6 Gewichtsanteilen Paprikabohnen, 18,0 Gewichtsanteilen Flactooligosacchariden, 20,8 Gewichtsanteilen Soju oder Wein, 0,1 Gewichtsanteilen schwarzer Pfeffer, 0,4 Gewichtsanteilen Sesampulver, 1,1 Gewichtsanteilen Pulver von getrocknetem Knoblauch, 1,1 Gewichtsanteilen Pulver von getrockneten Zwiebeln, 3,6 Gewichtsanteilen Ingwerpulver, 3,6 Gewichtsanteilen Lecithin, 3,6 Gewichtsanteilen Taurin, 3,6 Gewichtsanteilen Mandarinenschalenextrakte, 3,6 Gewichtsanteilen Dattelpflaumenblätterextrakten, 1,8 Gewichtsanteilen von Pulvern von Extrakten des gemeinen Bocksdorns und 3,6 Gewichtsanteilen von Extrakten aus grünem Tee besteht.

9. Nahrungsmittel zum Vorbeugen gegen Fettleibigkeit und Hyperlipidämie nach Anspruch 1 oder Anspruch 2, **dadurch gekennzeichnet, dass** das Nahrungsmittel aus 45 Gewichtsanteilen aus Tomatensoße, 5 Gewichtsanteilen aus Zwiebelpulver, 5 Gewichtsanteilen Ingwerpulver, 5 Gewichtsanteilen Taurin, 5 Gewichtsanteilen Lecithin, 5 Gewichtsanteilen von Mandarinenschalenextrakten, 5 Gewichtsanteilen von Dattelpflaumenblätterextrakten, 5 Gewichtsanteilen von Buchweizenblätterextrakten, 4 Gewichtsanteilen von Blättern von gemeinem Bocksdorn, 5 Gewichtsanteilen von Extrakten aus grünem Tee und 5 Gewichtsanteilen Salz besteht.

10. Nahrungsmittel zum Vorbeugen gegen Fettleibigkeit und Hyperlipidämie nach Anspruch 1 oder Anspruch 2, **dadurch gekennzeichnet, dass** das Nahrungsmittel eine Rezeptur für einen Fleischbratling für Hamburger ist, um Fettleibigkeit vorzubeugen, welche durch Mischen von 100 Gewichtsanteilen Fleisch für Hamburger, 1,5 Gewichtsanteilen Zwiebelpulver, 1,5 Gewichtsanteilen Knoblauchpulver und 1,5 Gewichtsanteilen Ingwerpulver hergestellt ist, und wobei ein Bestandteil, welcher aus der Gruppe ausgewählt ist, welche aus Buchweizenpulver, Dattelpflaumenblätterpulver und Pulvern von grünen Teeblättern in einer Menge von 2 bis 10 Gewichtsanteilen besteht, zugefügt wird.

11. Nahrungsmittel zum Vorbeugen gegen Fettleibigkeit und Hyperlipidämie nach Anspruch 1 oder Anspruch 2, **dadurch gekennzeichnet, dass** das Nahrungsmittel eine Würzrezeptur zum Vorbeugen von Fettleibigkeit und Hyperlipidämie ist, welche aus 50 Gewichtsanteilen Tomatensoße, 5 Gewichtsanteilen Vitamin C, 5 Gewichtsanteilen Taurin, 5 Gewichtsanteilen schwarzer Pfeffer, 5 Gewichtsanteilen Salz, 5 Gewichtsanteilen Buchweizenblätter, 5 Gewichtsanteilen Knoblauch, 5 Gewichtsanteilen Zwiebel, 5 Gewichtsanteilen Ingwer, 5 Gewichtsanteilen Zitronenschalenextrakt und 5 Gewichtsanteilen Maissirup zusammengesetzt ist.

12. Nahrungsmittel zum Vorbeugen gegen Fettleibigkeit und Hyperlipidämie nach Anspruch 1 oder Anspruch 2, **dadurch gekennzeichnet, dass** das Nahrungsmittel eine Würzrezeptur zum Vorbeugen gegen Fettleibigkeit und Hyperlipidämie ist, welche aus zwei Gewichtsanteilen Ginsengextrakten, 3 Gewichtsanteilen von Extrakten von Blättern des gemeinen Bocksdorns, 2 Gewichtsanteilen Alpenbeerenextrakte und 3 Gewichtsanteilen Zitronenschalenextrakten zusammengesetzt ist.

## Revendications

1. Aliment destiné à être utilisé dans un procédé de prévention de l'adiposité et de l'hyperlipidémie, l'aliment comprenant des poudres séchées, des extraits dans de l'eau en ébullition ou des extraits dans de l'éthanol de feuilles de perilla vert, de feuilles de patate douce, de feuilles de piment rouge, de feuilles de citrouille, de feuilles de dolique à oeil noir, de feuilles de fève, de feuilles d'orge, de feuilles de blé, de feuilles d'avoine, de feuilles de mûrier, de feuilles d'aster, d'asters rudes, de campanules, de platycodons, de Codonopsis lanceolata, d'Amaranthus Lividus, de Portulaca oleracea, de sedum, de laitue, de laitue sauvage coréenne, de bourse à pasteur, de Pimpinella brachycarpa, de fatsia terrestre, de racine de sceau de Salomon, de plantain, d'absinthe, de pissenlits, de salicornia herbacea, de chicorée, de céleri, de persil, de chou, de chou chinois, de feuilles de radis, de feuilles de radis rouge, de carotte, de feuilles de carotte, de feuilles d'épinard, de brocoli et de feuilles de brocoli, de chou-fleur et de feuilles de chou-fleur, d'angélique, de feuilles de filipendule, de poireau, d'oignon et de feuilles d'oignon, de feuilles d'oignon vert, de chrysanthème couronné, de feuilles d'ail, de feuilles de taro, de mauve, de bette, de moutarde à feuilles rouges, de laitue, d'aloès, de cactus, de radis, de luzerne, de betterave, d'asperge, de chou vert, de pakchoï en rosette, de moutarde bleue, de moutarde rouge, d'angélique à feuilles, de bardane, de pétasite officinal, de Pohyangcho, de germes de haricot, de romarin, de sauge, de feuilles de thé vert, d'aneth, de feuilles et de graines de fenouil, de feuilles de stevia, de raisin, de bleuet, de feuilles de pomme, d'algues brunes, de tangle, d'algues, d'algues marines et de Lentinus edodes.

2. Aliment destiné à la prévention de l'adiposité et de l'hyperlipidémie selon la revendication 1, **caractérisé en ce que** l'aliment comprend en outre des extraits d'une ou de plusieurs plantes choisies parmi les feuilles de persimmon, les feuilles de sarrasin, les feuilles de lyciet de Chine, et les zestes d'agrumes.

3. Aliment destiné à la prévention de l'adiposité et de l'hyperlipidémie selon la revendication 1, **caractérisé en ce que** l'aliment est l'un quelconque des aliments choisis dans le groupe constitué du boeuf, du porc, du poulet, du mouton, de la viande de canard, des galettes de viande pour hamburger, du jambon, de la saucisse, des hot-dogs, du bacon, du lait, du yaourt, de la glace et du fromage.

4. Aliment destiné à la prévention de l'adiposité et de l'hyperlipidémie selon la revendication 1, **caractérisé en ce que** lesdits extraits dans de l'eau en ébullition sont préparés en mélangeant lesdites plantes avec de l'eau dans le rapport de 1/10 à 4/10 et en extrayant à 100 °C pendant 2 à 8 heures.

5. Aliment destiné à la prévention de l'adiposité et de l'hyperlipidémie selon la revendication 1, **caractérisé en ce que** lesdits extraits dans de l'éthanol sont préparés en ajoutant lesdites plantes dans 60 à 95 % d'éthanol dans le rapport de 1/10 à 4/10 et en extrayant à une température de 60 à 80 °C pendant 1 à 8 heures.

6. Procédé de fabrication d'un d'aliment destiné à la prévention de l'adiposité et de l'hyperlipidémie, dans lequel des poudres séchées, des extraits dans de l'eau en ébullition ou des extraits dans de l'éthanol de plantes selon la revendication 1 sont ajoutés dans l'un quelconque des aliments choisis dans le groupe constitué du boeuf, du porc, du poulet, du mouton, de la viande de canard, des galettes de viande pour hamburger, du jambon, de la saucisse, des hot-dogs, du bacon, du lait, du yaourt, de la glace et du fromage.

7. Procédé de fabrication d'un d'aliment destiné à la prévention de l'adiposité et de l'hyperlipidémie selon la revendication 6, **caractérisé en ce que** l'un quelconque des éléments choisis dans le groupe constitué des grains de poivre, de la poussière de poivre, des sauces tomate, des extraits de tomate, des vitamines, des acides aminés, du sélénium (Se) sont en outre ajoutés conjointement avec les poudres séchées, les extraits dans de l'eau en ébullition ou les extraits dans de l'éthanol de plantes.

8. Aliment destiné à la prévention de l'adiposité et de l'hyperlipidémie selon la revendication 1 ou la revendication 2, **caractérisé en ce que** ledit aliment est constitué de 15,0 parties en poids de sauce soja, de 17,6 parties en poids de grains de poivre, de 18,0 parties en poids de Flactooligosaccharide, de 20,8 parties en poids de Soju ou de vin, de 0,1 partie en poids de poivre noir, de 0,40 partie en poids de poudres de sésame, de 1,10 partie en poids de poudres d'ail séché, de 1,10 partie en poids de poudres d'oignon séché, de 3,60 parties en poids de poudres de gingembre, de 3,60 parties en poids de lécithine, de 3,60 parties en poids de taurine, de 3,60 parties en poids d'extraits de zeste de tangerine, de 3,60 parties en poids de poudres d'extraits de feuilles de persimmon, de 1,80 partie en poids de poudres d'extraits de feuilles de lyciet de Chine et de 3,60 parties en poids d'extraits de thé vert.

9. Aliment destiné à la prévention de l'adiposité et de l'hyperlipidémie selon la revendication 1 ou la revendication 2, **caractérisé en ce que** ledit aliment est constitué de 45 parties en poids de sauces tomate, de 5 parties en poids de poudres d'oignon, de 5 parties en poids de poudres de gingembre, de 5 parties en poids de taurine, de 5 parties en poids de lécithine, de 5 parties en poids d'extraits de zeste de tangerine, de 5 parties en poids d'extraits de feuilles de persimmon, de 5 parties en poids d'extraits de feuilles de sarrasin, de 4 parties en poids d'extraits de feuilles de lyciet de Chine, de 5 parties en poids d'extraits de thé vert et de 5 parties en poids de sel.

10. Aliment destiné à la prévention de l'adiposité et de l'hyperlipidémie selon la revendication 1 ou la revendication 2, **caractérisé en ce que** ledit aliment est constitué d'une composition de galettes de viande pour hamburger destinée à la prévention de l'adiposité fabriquée en mélangeant 100 parties en poids de viandes pour hamburger, 1,5 partie en poids de poudres d'oignon, 1,5 partie en poids de poudres d'ail et 1,5 partie en poids de poudres de gingembre puis en ajoutant l'un quelconque des éléments choisis dans le groupe constitué des poudres de sarrasin, des poudres de feuilles de persimmon et des poudres de feuilles de thé vert dans une quantité de 2 à 10 parties en poids.

11. Aliment destiné à la prévention de l'adiposité et de l'hyperlipidémie selon la revendication 1 ou la revendication 2, **caractérisé en ce que** ledit aliment est constitué d'une composition d'assaisonnement destinée à la prévention de l'adiposité et de l'hyperlipidémie constituée de 50 parties en poids de sauce tomate, de 5 parties en poids de vitamine C, de 5 parties en poids de taurine, de 5 parties en poids de poivre noir, de 5 parties en poids de sel, de 5 parties en poids de feuilles de sarrasin, de 5 parties en poids d'ail, de 5 parties en poids d'oignon, de 5 parties en poids de gingembre, de 5 parties en poids d'extraits de zestes d'agrumes et de 5 parties en poids de sirop de mais.

12. Aliment destiné à la prévention de l'adiposité et de l'hyperlipidémie selon la revendication 1 ou la revendication 2, **caractérisé en ce que** ledit aliment est constitué d'une composition d'assaisonnement destinée à la prévention de l'adiposité et de l'hyperlipidémie constituée de 2 parties en poids d'extraits de ginseng, de 3 parties en poids d'extraits de feuilles de lyciet de Chine, de 2 parties en poids d'extraits de chicouté et de 3 parties en poids d'extraits de zestes d'agrumes.
